# EUROPEAN PATENT APPLICATION

(11) **EP 2 466 570 A2**
(43) Date of publication of application: **20.06.2012**
(21) Application number: 10808406.2
(22) Date of filing: 16.08.2010
(51) Int. Cl.: G09B 5/06, G09B 19/06, G09B 7/02

(54) **ENGLISH LEARNING SYSTEM**

(30) Priority: 14.08.2009 KR 20090075287; 17.09.2009 KR 20090088069; 01.12.2009 KR 20090117813
(71) Applicant: O, Joo Sung, Seoul 135-230 (KR)
(72) Inventor: O, Joo Sung, Seoul 135-230 (KR)
(74) Representative: Moore, Graeme Patrick
(86) International application number: PCT/KR2010/005392
(87) International publication number: WO 2011/019257

(57) **Abstract**

The present invention relates to an English learning system, and more specifically, to an English syllable pronunciation and spelling learning system for the learning of words (including phrases and sentences), in which a learner sequentially recognizes syllables and spellings at a level of detail which is not the word so that the efficiency of memorization of the pronunciations and spellings of words can be improved, by outputting English words onto a screen under control in such a way that the spellings of the words, or the spellings of the syllables separated from the words, are displayed with a space or visual effect (coloring and writing with spaces) or else a time effect (sequentially outputting to screen) and an auditory effect.

## Description

### CROSS-REFERENCE TO RELATED APPLICATION

This application claims the benefit of Korean Patent Application No. 10-2010-005392, filed August 16, 2010, the disclosure of which is hereby incorporated herein by reference in its entirety.

### BACKGROUND OF THE INVENTION

### 1. Field of the Invention

An aspect of the present invention relates to an English learning system, and more specifically, to an English syllable pronunciation and spelling learning system for the learning of words (including phrases and sentences), in which a learner sequentially recognizes syllables and spellings at a level of detail which is not the word so that the efficiency of memorization of the pronunciations and spellings of words can be improved, by outputting English words onto a screen under control in such a way that the spellings of the words, or the spellings of the syllables separated from the words, are displayed with a space or visual effect (coloring and writing with spaces) or else a time effect (sequentially outputting to screen) and an auditory effect.

### 2. Description of the Related Art

As international exchange with foreigners rapidly increases with the development of traffic and communication, interest in English has been tremendously increased.

The ability of conversation is very important to speak English fluently. However, since vocabularies used in conversation in English are composed of words, a learner who does not learn words cannot have a proper conversation. Therefore, the learning of words should be performed in advance.

However, conventional English learning methods using English word learning machines are performed in a manner that a leaner memorizes the pronunciation of a word in English and a meaning of the word in Korean. Therefore, the learner has difficulty in being fully aware of spellings constituting a word.

Accordingly, it is urgently required to introduce a separate English learning system for being fully aware of spellings of words in English for the purpose of English learning improvement.

In addition, it is required to introduce an English learning method capable of learning not only alphabet spellings not only pronunciation based on a syllables, for the purpose of application of phonics that is an English basic learning method for studying exact phonemic relations of alphabet spellings.

### SUMMARY OF THE INVENTION

Embodiments of the present invention provide an English spelling learning system in which a learner recognizes a word included in an English word group by separating the word into individual spellings or syllables based on pronunciation learning, so that the learner can efficiently memorize the spellings of the word.

According to an aspect of the present invention, there is provided an English learning system sequentially outputting word groups through a display unit, the system including: a database configured to store words to be learned; and an interface control unit configured to extract a group from the words and sequentially display words contained in the group in the display unit, wherein the interface control unit controls spellings of each of the words to be sequentially displayed at a predetermined time interval.

According to another aspect of the present invention, there is provided an English learning system sequentially displaying words through a display unit, the system including: a database configured to store words to be learned; and an interface control unit configured to extract a group from the words and sequentially display words contained in the group in the display unit, wherein the interface control unit controls syllables separated from each of the words to be displayed together with an accent of the word.

According to still another aspect of the present invention, there is provided an English learning system sequentially displaying words through a display unit, the system including: a database configured to store words to be learned; and an interface control unit configured to extract a group from the words and sequentially display words contained in the group in the display unit, wherein the interface control unit controls syllables separated from each of the words to be displayed.

The interface control unit may further include a syllable separation module configured to separate a word contained in an extracted word or sentence for each syllable that is a minimum unit of pronunciation.

The syllable separation module may separate syllables in a word by applying four syllable separation rules comprising "single vowel," "consonant + vowel," "consonant + vowel + consonant" and "vowel + consonant."

When the syllable separation rules are applied, the syllable separation module may recognize consecutive consonants as a single consonant, i) when same consonants are consecutive (excluding "cc + vowel," "II + vowel" and "rr + vowel"), ii) when different consonants are consecutively combined (consonant + h, dg, mm, ck and xy) and iii) when two consonants are exceptionally combined (s + consonant, consonant + r and consonant + l); and the syllable separation module may recognize consecutive vowels as a single vowel, i) when same vowels are consecutive, ii) when two or more different vowels are consecutive, iii) when a vowel and a consonance are exceptionally combined (vowel + I, vowel + r and vowel + x) and iv) when a consonant is regarded as a vowel (consonant + y, excluding xy).

The syllable separation module may separate syllables from a word by sequentially analyzing spellings and applying one of the four syllable separation rules. The syllable separation module may separate a syllable by applying the rule "consonant + vowel + consonant" when a consonant, a vowel and a consonant are consecutive and a next spelling is a consonant, separates a syllable by applying the rule "consonant + vowel" when a next spelling is a vowel, and separates a syllable by sequentially analyzing spellings next to the separated syllable and applying one of the four syllable separation rules. The syllable separation module may disregard a spelling consecutive after satisfying one of the four syllable separation rules when the spelling is the last spelling of the word.

When a word includes a minimum syllable not separated any more through the syllable separation module, the interface control unit may regard a vowel contained in the word as an accent and display the vowel to be distinguished from the other spellings. When a word is separated into at least two syllables through the syllable separation module, the interface control unit may display an accent (') of the word and a vowel corresponding to the accent so that the accent and the vowel are distinguished from each other.

The interface control unit may the syllables separated by the syllable separation module to be simultaneously displayed by inserting a space between the syllables or providing colors to the respective syllables.

The interface control unit may control spellings of the syllables or spellings of each of the syllables separated by the syllable separation module to be sequentially displayed so that the separated syllables are separated by a predetermined space or colors of the separated syllables are different from one another.

The interface control unit may further include a text to speech (TTS) module configured to insert a tag as a syllable division data between the syllables separated by the syllable separation module, and output a pronunciation in synchronization with a syllable displayed for each of the syllables based on the tag.

When spellings of the word are displayed, the interface control unit may control different colors of the spellings to be displayed or control a typing sound or sound of a corresponding alphabet to be simultaneously outputted together with each of the spellings.

The interface control unit may control syllables or spellings of the word to be displayed at a time interval set in a range from 0.01 to 2 seconds.

The system may further include a learning control unit configured to provide a learner with all words in a group through the interface control unit, extract only words unfamiliar with the learner and provide the extracted words to a next round, and provide a learning mode for controlling the interface control unit to repeat the round until there exists no word unfamiliar with the learner.

The learning control unit may provide a menu "Pass" selected when the word is a word familiar with the learner or the learning is completed, a menu "Learn" for providing detailed information of the word and a menu "Repeat" selected when the learning is not completed, and add an exclusion flag to the word and stores the word having the exclusion flag added thereto in the database. When the menu "Learn" is selected, the learning control unit may provide the detailed information on the word. When the menu "Pass" is selected after the learning of the word is completed, the learning control unit may add an exclusion flag to the word and store the word having the exclusion flag added thereto in the database. When the menu "Repeat" is selected, the learning control unit may store the word without adding the exclusion flag to the word, and provide the learner with only words having no exclusion flag in a subsequent round.

The learning control unit may provide a menu "Pass" selected when the word is a word familiar with the learner or the learning is completed, a menu "Learn" for providing detailed information of the word and a menu "Repeat" selected when the learning is not completed, and add an exclusion flag to the word and stores the word having the exclusion flag added thereto in the database. When the menu "Learn" is selected, the learning control unit may provide the detailed information on the word. When the menu "Pass" is selected after the learning of the word is completed, the learning control unit may add an exclusion flag to the word and store the word having the exclusion flag added thereto in the database. When a predetermined time is counted and the menu "Pass" is not inputted until the predetermined time elapses, the learning control unit may store the word without adding the exclusion flag to the word, and provide the learner with only words having no exclusion flag in a subsequent round.

The learning control unit may provide a menu "Learn" for providing detailed information of the word and a menu "Repeat" selected when the learning is not completed. When a predetermined time is counted and the menu "Pass" is not inputted until the predetermined time elapses, the learning control unit may add an exclusion flag to the word and store the word having the exclusion flag added thereto in the database. When the menu "Learn" is selected, the learning control unit may provide the detailed information on the word. When the predetermined time is counted after the learning of the word is completed and the menu "Repeat" is not inputted until the predetermined time elapses, the learning control may add an exclusion flag to the word and store the word having the exclusion flag added thereto in the database. When the menu "Repeat" is inputted, the learning control unit may store the word without adding the exclusion flag to the word, and provide the learner with only words having no exclusion flag in a subsequent round.

The learning control unit may display a word and detailed information on the word at the same time or at a predetermined time interval, and provide a menu "Pass" selected when the word is a word familiar with the learner, and a menu "Repeat" selected when the learning is not completed. When the menu "Pass" is inputted, the learning control unit may add an exclusion flag to the word and store the word having the exclusion flag added thereto in the database. When the menu "Repeat" is selected, the learning control unit may store the word without adding the exclusion flag to the word, and provide the learner with only words having no exclusion flag in a subsequent round.

The learning control unit may sequentially display a word and additional information on the word at the same time or at a predetermined time interval, and provide a menu "Pass" selected when the word is a word familiar with the learner. When the menu "Pass" is inputted, the learning control unit may add an exclusion flag to the word and store the word having the exclusion flag added thereto in the database. When a predetermined time is counted and the menu "Pass" is not inputted until the predetermined time elapses, the learning control unit may store the word without adding the exclusion flag to the word, and provide the learner with only words having no exclusion flag in a subsequent round.

The learning control unit may sequentially display a word and additional information on the word at the same time or at a predetermined time interval, and provide a menu "Repeat" selected when the learning is not completed. When a predetermined time is counted and the menu "Repeat" is not inputted until the predetermined time elapses, the learning control unit may add an exclusion flag to the word and store the word having the exclusion flag added thereto in the database. When the menu "Repeat" is inputted, the learning control unit may store the word without adding the exclusion flag to the word, and provide the learner with only words having no exclusion flag in a subsequent round.

After the first round is finished, the learning control unit may extract only words having no exclusion flag from words contained in a group and repeatedly provide the extracted words to a second round. After the second round is finished, the learning control unit may repeatedly perform the round until there exists no word having no exclusion flag in the group by repeating the process of extracting only words having no exclusion flag from the words contained in the group and repeatedly provides the extracted words to a third round.

The learning control unit may further include a test mode providing module configured to sequentially display words contained in a selected group, and test a learner's spelling ability by providing at least one spelling of the words as a blank and deciding whether or not the corresponding spelling directly inputted by the learner is correct.

When the spelling inputted into the blank by the learner is correct, the test mode providing module may add an exclusion flag to the word and store the word having the exclusion flag added thereto in the database. When the inputted into the blank by the learner is incorrect, the test mode providing module may repeatedly provide the test in a next round without adding the exclusion flag to the word.

### BRIEF DESCRIPTION OF THE DRAWINGS

These and/or other aspects and advantages of the invention will become apparent and more readily appreciated from the following description of the embodiments, taken in conjunction with the accompanying drawings of which:

FIGS. 1 and 2 are block configuration diagrams schematically showing an English learning system according to a preferred embodiment of the present invention;

FIG. 3 is a flowchart illustrating a state in which a syllable separation rule is applied according to the present invention;

FIGS. 4 and 5 are exemplary views illustrating words to which the syllable separation rule is applied according to the present invention;

FIG. 6 is a flowchart schematically illustrating an English spelling learning method according to a first embodiment of the present invention;

FIGS. 7 to 9 are exemplary views illustrating a word group according to the preferred embodiment of the present invention;

FIG. 10 is an exemplary view showing a state in which when spellings of a word are sequentially outputted, their colors are changed according to the preferred embodiment of the present invention;

FIGS. 11 to 13 are exemplary views showing a state in which a word are separated for each syllable and the separated syllables are then outputted according to the preferred embodiment of the present invention;

FIG. 14 is a detailed flowchart illustrating of step S130 of FIG. 6 according to the first embodiment of the present invention;

FIG. 15 is a detailed flowchart illustrating of the step S130 of FIG. 6 according to a second embodiment of the present invention;

FIG. 16 is a detailed flowchart illustrating of the step S130 of FIG. 6 according to a third embodiment of the present invention;

FIG. 17 is an exemplary view showing a state in which spellings of a word are sequentially outputted according to the preferred embodiment of the present invention;

FIGS. 18 to 19 are exemplary views showing a state in which when a learning menu is selected, detailed information is outputted according to the preferred embodiment of the present invention;

FIG. 20 is a view showing an interface screen according to the second embodiment of the present invention;

FIG. 21 is a view showing an interface screen according to the third embodiment of the present invention;

FIG. 22 is a detailed flowchart illustrating the step S130 of FIG. 6 according to a fourth embodiment of the present invention;

FIG. 23 is a detailed flowchart illustrating the step S130 of FIG. 6 according to a fifth embodiment of the present invention;

FIG. 24 is a view showing an interface screen according to the fourth embodiment of the present invention;

FIG. 25 is a view showing an interface screen according to the fifth embodiment of the present invention; and

FIG. 26 is an exemplary view showing a state in which spellings of a word and blanks interposed between the spellings are outputted in a test mode according to the preferred embodiment of the present invention.

### DETAILED DESCRIPTION OF THE INVENTION

The present invention is described more fully hereinafter with reference to the accompanying drawings, in which embodiments of the present invention are shown. This present invention may, however, be embodied in many different forms and should not be construed as limited to the embodiments set forth herein. Rather, these embodiments are provided so that this disclosure is thorough, and will fully convey the scope of the present invention to those skilled in the art.

Hereinafter, a preferred embodiment of the present invention will be described in detail with reference to the accompanying drawings.

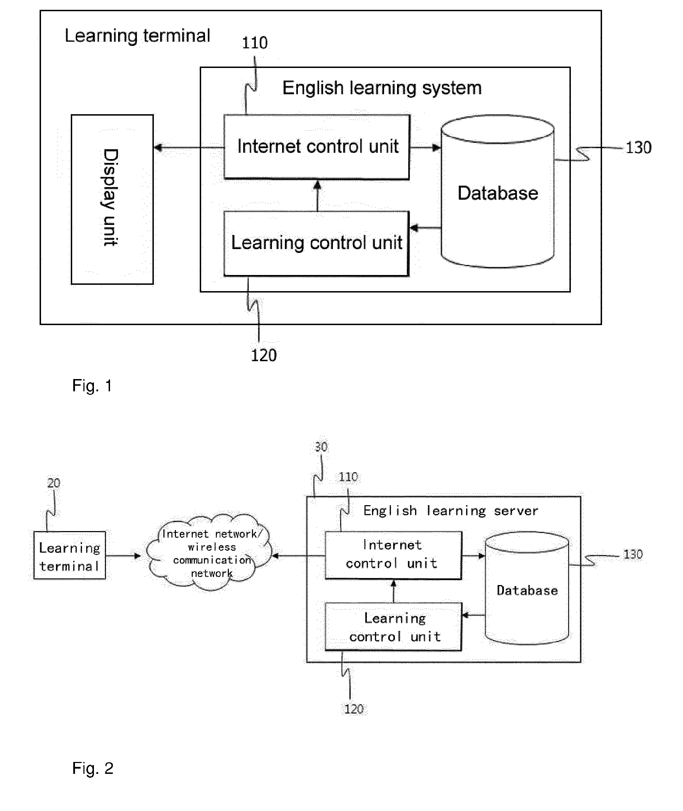

FIGS. 1 and 2 are block configuration diagrams schematically showing an English learning system according to a preferred embodiment of the present invention.

FIG. 1 shows a case in which the English learning system is embedded in a learning terminal. FIG. 2 shows a case in which the English learning system is configured as a server through an on-line network and a learner receives a service provided by connecting the server through the learning terminal.

That is, the English learning system according to the preferred embodiment of the present invention may be provided in the form of software embedded in a learning terminal possessed by a learner, or may be provided to a large number of learners by being built up as an on-line server.

When the English learning system is configured as a server, the learning terminal may have an agent for executing a service provided from the English learning system.

Here, the learning terminal may include not only computer terminals such as a personal computer and a notebook computer but also all portable electronic devices such as a cellular phone, a PMP, a PDA, a Wibro terminal and an electronic dictionary. However, when the learning terminal is configured as a server, it is necessary that the learning terminal should be a terminal capable of performing wireless communication.

The English learning system according to this embodiment may include a database 130 and an interface control unit 110. Here, the database 130 stores words, phrases or sentences. The interface control unit 110 extracts one group from the words, phrases or sentences and sequentially displays words, phrases or sentences belonging to the group in a display unit. In this case, the interface control unit 110 controls spellings of each of the words or sentences to be sequentially displayed in the display unit.

Hereinafter, words and a phrase or sentence having two or more words, provided in the present invention, are all defined as word groups.

In the case of a phrase or sentence having two or more words, the interface control unit 110 may be configured so that the words of the phrase or sentences are sequentially displayed at a predetermined time interval.

When the English learning system is configured as a server, the interface control unit 110 may further include a module that performs a log-in procedure for identifying a learner, and the database 130 may further include information on subscribed learners.

Here, the information on the subscribed learners may include personal information containing a learner identification code, a name, an age, etc., and learning information containing a learning level, a number of connection times, learning result data, etc.

When spellings of a word in the word group, the interface control unit 110 may control the spellings of different colors to be displayed or may control a typing sound or an alphabet to be displayed while displaying the corresponding alphabet.

The interface control unit 110 may control pronunciations of words in a word group to be displayed after spellings of the words in the corresponding word group are all displayed.

Here, the time interval at which spellings of a word in the word group are sequentially displayed have important influence on a learning effect. When the time interval is extremely short, all the spellings are displayed before a learner recognizes the spellings, and therefore, the effect of spelling learning may be reduced. When the time interval is extremely long, the effect of recognizing spellings, but the entire learning time may be increased.

Therefore, it is important to set an optimal time interval, and the time interval is preferably set in a range from 0.01 to 2 seconds depending on an ability level of the learner. To this end, the interface control unit 110 may provide a menu with which the learner can directly set the time interval.

The interface control unit 110 may include a syllable separation module that separates a word (in the case of a sentence, a word included in the sentence) or a phrase for each syllable.

Here, the syllable is a phoneme separated when a word is pronounced, and means a minimum unit of pronunciation obtained by combining a vowel or consonant and a vowel.

The syllable separation module functions to store a syllable separation rule, analyze a word and separate the word into syllables.

The syllable separation rule for separating a word into syllables is divided into the following four rules.

1) Single vowel

2) Consonant + vowel

3) Consonant + vowel + consonant

4) Vowel + consonant

Hereinafter, the four rules will be described in detail.

1) Single vowel

The rule is used when a single vowel is positioned at the head of a word and forms a syllable.

For example, when the word is "about," the "about" is separated into "a" as a vowel and "bout." When the word is "education," "e" is separated as one syllable.

2) Consonant + vowel

The rule is used when the combination of "consonant + vowel" included in a word is separated as one syllable.

For example, when the word is "sister," "si" as a combination of "consonant + vowel" is separated as one syllable. When the word is "visit," "vi" is separated as one syllable.

3) Consonant + vowel + consonant

The rule is used when the combination of "consonant +vowel +consonant" included in a word is separated as one syllable.

For example, "con" of "condition" or "per" of "persist" is combined as "consonant +vowel +consonant," and the combination is separated as one syllable.

4) Vowel + consonant

The rule is used when the combination of "vowel + consonant" included in a word is separated as one syllable.

For example, "en" of "engineer" or "in" of "insight" is combined as "vowel + consonant," and the combination is separated as one syllable.

The syllable separation rule is basically divided into four rules. Specifically, "consonant" and "vowel" applied to the four rules may be divided into single and combined consonants and single and combined vowels, respectively.

Here, the combined consonants mean consonants obtained by consecutively combining two consonants, and the combined vowels mean vowels obtained by consecutively combining two vowels.

The following combined consonants are recognized as single consonants.

1) When two consecutive same consonants are pronounced as one consonant (e.g., bb [hobby], dd [dodder], ff [different], gg [aggressive], mm [summer], nn [anniversary], pp [appear], ss [kiss], tt [mitt], vv [bevvy], etc.), the two consecutive same consonants are recognized as a single consonant.

However, when two consecutive same consonants are pronounced as two consonants (e.g., "cc + vowel" [succeed], "II + vowel" [collect], "rr + vowel" [arrive], etc.), the two consecutive same consonants are recognized as two consonants. Accordingly, in the examples, the "succeed" is separated into suc/ceed, the "collect" is separated into col/lect, and the "arrive" is separated into ar/rive.

2) When two combined consonants are pronounced as one consonant (e.g., consonant + h [chimney, telephone, shine or theory], ck [check], ng [bring], mn [autumn], dg [bridge], ph [telephone], xy [xylophone], etc.), the two combined consonants are recognized as one consonant.

3) Exceptionally, the following two combined consonants are recognized as one consonant.

Consonant + L (e.g., plan, clide, cluster, etc.), consonant + R (e.g., credible, praise, breast, etc.), and S + consonant (e.g., storm, student, score, etc.)

When two vowels are consecutive, the two vowels are recognized as one vowel.

The case in which the two vowels are consecutive refers to 1) when two same vowels are consecutive (e.g., aa, ee, ii, oo, uu, etc.) and 2) when two different vowels are consecutive (e.g., ae, ai, ei, io, uo, ou, etc.).

Exceptionally, there may be a case in which three vowels are consecutive. In this case, the three vowels are recognized as one vowel (e.g., eau [beautiful], iou [behaviour], etc.).

3) Exceptionally, when the following combined vowels are consecutive, the pronunciation of the combined vowels cannot be separated. Therefore, the combined vowels are recognized as one vowel.

"Vowel + I" (e.g., element), "vowel + r" (e.g., characteristic), "vowel + x" (e.g., exercise)

For example, when "el" in "element" is "vowel + I", the "el" is recognized as a single vowel based on the rule. Since vowel "e" is positioned next to the "el," "ele" become combined vowels. Therefore, the "ele" are recognized as one vowel.

4) When a consonant is recognized as a vowel,

"Consonant + y" (e.g., study, system, excluding "xy")

Here, the "consonant + y" corresponds to combined consonants, but "y" is substantially pronounced as "i" as a vowel. Therefore, the "y" combined next to the "consonant" will be exceptionally recognized as a vowel.

The syllable separation rule is summarized as shown in the following Table 1.

**Table 1**

| Syllable Separation Rule | Detailed rules |
|---|---|
| 1) Single Vowel | • The following combined consonants are recognized as one consonant |
| 2) Consonant + Vowel | 1) When same consonants are pronounced as one consonant (bb, cc, dd, ff, gg, hh, jj, kk, II, mm, pp, qq, rr, ss, tt, vv, ww, xx, yy, zz), excluding |
| 3) Consonant + Vowel + Consonant | cc + vowel, II + vowel, rr + vowel |
| | 2) When two consonants are pronounced as one consonant |
| 4) Vowel + Consonant | (consonant + h, dg, mn, ck, xy) |
| | 3) Exceptional consonants (s + consonant, consonant + r, consonant + 1) |
| | • The following combined vowels are recognized as one vowel |
| | 1) When same vowels are consecutive |
| | 2) different two or more vowels are consecutive |
| | 3) Exceptional application |
| | - vowel + I |
| | - vowel + r |
| | - vowel + x |
| | - vowel + y (excluding xy) |
| | • When a spelling consecutive after previous spellings satisfy the four rules is the last spelling, the spelling is disregarded regardless of a consonant or vowel (e.g., re/turn, per/fume). |

A word is separated according to the syllable separation rule, and the separated syllables are displayed. In this case, the syllables may be displayed including an accent.

The case in which an accent is indicated together with the syllable separation for each word may be divided into a case in which the word is configured with a minimum syllable and a case in which the word is configured with at least two syllables.

The following Table 2 shows a state that an accent for a word configured with the minimum syllable is indicated when the word is not separated any more.

**Table 2**

| Word | Accent Indication |
|---|---|
| Cut | Cut |
| Red | Red |
| Feel | Feel |
| Talk | Talk |
| Soon | Soon |
| Half | HaIf |
| Top | Top |
| Step | Step |
| Less | Less |
| Ten | Ten |
| Wait | Wait |
| Plant | Plant |
| Mind | Mind |
| Full | Full |
| Blue | Blue |
| Laugh | Laugh |
| Job | Job |

When the word is configured with the minimum syllable as shown in Table 2, the accent does not indicated in the original word, but a vowel included in the word should be intensively pronounced. Therefore, the vowel included in the word is displayed to be distinguished from the other spellings by deciding the vowel as the accent.

In order to distinguish the vowel from the other spellings, the vowel may be displayed so that the color of the vowel is distinguished from the color of the other spellings as shown in Table 2, or the vowel may be displayed heavier than other spellings. That is, any visibly distinguishing methods may be applied.

The following Table 3 shows a state that an accent for a word is indicated when the word is separated into at least two syllables.

**Table 3**

| | |
|---|---|
| Word | Syllable Separation & Accent Indication |
| Together | To g'e ther |
| Always | 'Al ways |
| Exchange | Ex ch'an ge |
| Immediately | I mm'e dia tely |
| Olympic | Ol'ym pic |
| Institution | In sti t'u tion |
| Independence | In de p'en den ce |
| Estimate | 'Es ti ma te |
| Organization | Or ga ni z'a tion |
| Technique | Tech n'i que |
| Responsible | Res p'on si ble |
| Performance | Per f'or man ce |
| Critical | Cr'i ti cal |
| Prospect | Pr'os pect |
| Violence | V'i olen ce |
| Guarantee | Gua ran t'ee |
| Negotiation | Ne go ti'a tion |

As shown in Table 3, the word is separated into syllables, and the separated syllables are displayed. When an accent is included in one of the syllables, the accent may be displayed to be distinguished from the other syllables. In addition to the accent ('), a vowel(s) corresponding to the accent may also be displayed to be distinguished from the other syllables.

Accordingly, the learner can learn not only phonemes for words but also accents for the words, thereby improving learning efficiency.

Further, the position of the accent is emphasized by displaying the accent (') and a vowel(s) corresponding to the accent larger than other spellings, so that the learning efficiency can be more improved.

The method to which the syllable separation rule applied according to the present invention will be described in detail.

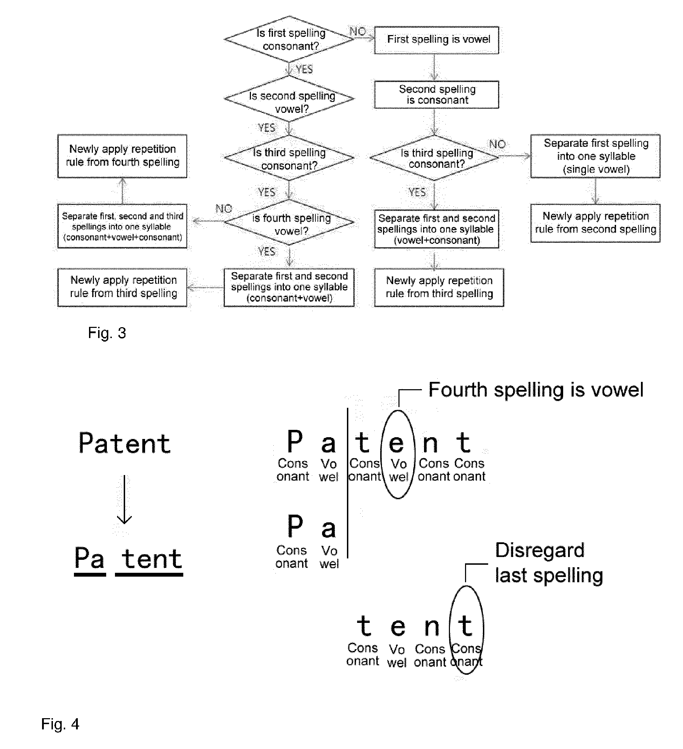

FIG. 3 is a flowchart illustrating a state in which the syllable separation rule is applied according to the present invention.

In the flowchart of FIG. 3, the combined consonants described above are recognized as a single consonant, and the combined vowels described above are recognized as a single vowel.

The syllable separation rule according to the present invention is applied depending on a spelling next to a current syllable. That is, the presence of corresponding of the current syllable to one of the four rules is determined based on whether or not the spelling next to the current syllable is started with a new syllable. This will be described more specifically with reference to FIG. 1.

Referring to FIG. 3, the syllable separation module decides whether a first spelling of a selected word is a consonant or vowel.

When the first spelling is a consonant, a vowel is necessarily used as a second spelling because combined consonants or combined vowels are not considered. In addition, a consonant is necessarily used as a third spelling. When a fourth spelling is a vowel, the first and second spellings are separated as one syllable under the rule "consonant + vowel." That is, since the fourth spelling is a vowel, the third and fourth spellings are combined (consonant + vowel), and therefore, a new syllable is formed. Hence, the first and second spellings are separated.

For example, when the word is "rose," a first spelling is a consonant (r), a second spelling is a vowel (o), a third spelling is a consonant (s), and a fourth spelling is a vowel (e). Therefore, "ro" as the first and second spellings are separated as one syllable.

When the fourth spelling is a consonant, the first, second and third spellings are separated as one syllable under the rule "consonant + vowel + consonant." That is, since the third and fourth spellings are consecutive consonants, the third and fourth spellings become "consonant + consonant" even if the third and fourth spellings are combined. Therefore, the third and fourth spellings do not form a new syllable. Accordingly, the first, second and third spellings are separated as one syllable by recognizing the third spelling as the last spelling of the previous syllable and recognizing the fourth spelling as the first spelling of the new syllable.

For example, when the word is "condition," a first spelling is a consonant (c), a second spelling is a vowel (o), and a third spelling is a consonant (n). However, a fourth spelling is also a consonant (d), and therefore, "con" as the first, second and third spellings are separated as one syllable.

However, when the consonant that is the fourth spelling is the last spelling, the fourth spelling is disregarded, the method is finished without separation.

When the first spelling is a vowel, a consonant is necessarily used as the second spelling. When the third spelling is a vowel, only the first spelling is separated as one syllable under the rule "single vowel." That is, since a new syllable is started from the consonant as the second spelling in the state which the third spelling is a vowel, only the first spelling is separated as one syllable.

For example, when the word is "above," a first spelling is a vowel (a), a second spelling is a consonant (b), and a third spelling is a vowel (o). Therefore, "a" as the first spelling is separated as one syllable.

When the third spelling is a consonant, the first and second spellings are separated as one syllable under the rule "vowel + consonant." That is, since the second and third spellings are consonants, a new syllable is started from the third spelling. Therefore, the first and second spellings are separated as one syllable.

For example, when the word is "income," a first spelling is a vowel (i), a second spelling is a consonant (n), and a third spelling is a consonant (c). Therefore, "in" as the first and second spellings are separated as one syllable.

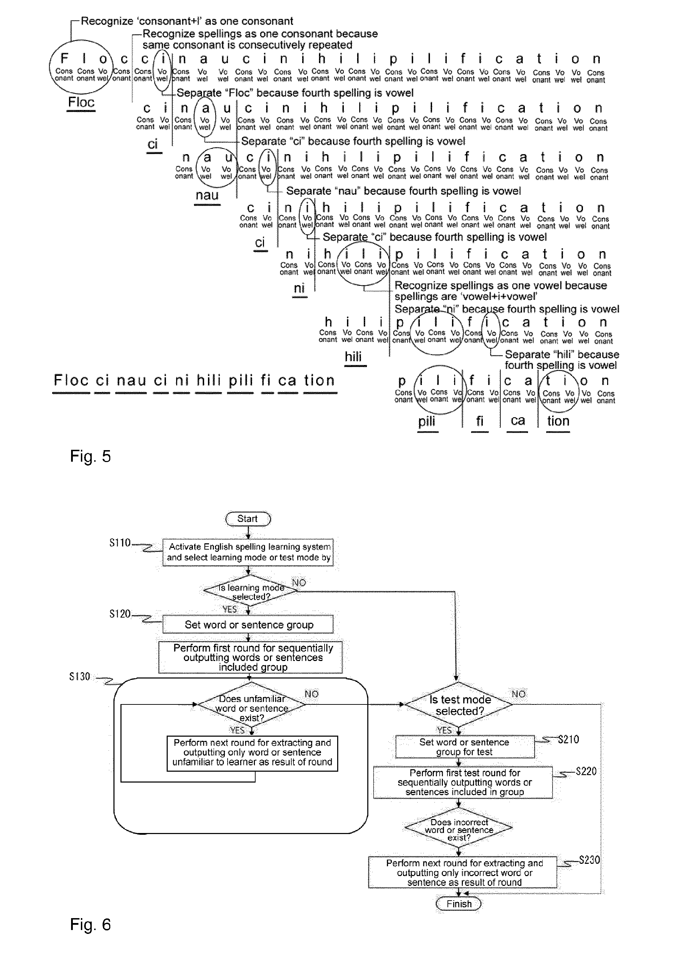

FIGS. 4 and 5 are exemplary views illustrating words to which the syllable separation rule is applied according to the preferred embodiment of the present invention.

FIG. 4 illustrates syllable separation for a word "patent," in which a first spelling is a consonant (p), a second spelling is a vowel (a), and a third spelling is a consonant (t). Therefore, an initially separated syllable is decided based on the fourth spelling.

Since a fourth spelling is a vowel (e), a meaningful syllable (consonant + vowel) is started from the third spelling. Therefore, "pa" as the first and second spellings are separated as a first syllable.

If the first syllable is separated as described above, the syllable separation rule is again applied from the third spelling as a spelling next to the separated first syllable. Since the third spelling is a consonant (t), the fourth spelling is a vowel (e) and the fifth spelling is a consonant (n), the third, forth and fifth spellings satisfy the rule "consonant + vowel + consonant." Since the sixth spelling is the last spelling, the sixth spelling is disregarded. Thus, the "patent" is separated into only "pa" and "tent."

FIG. 5 illustrates syllable separation for the longest word "floccinaucinihilipilification." Since "fl" as combined consonants are recognized as one consonant, the "fl" becomes a first spelling. Since a second spelling is a vowel (o), a third spelling is a consonant (c), and a next spelling is a consonant (c), "floc" as the first, second and third spellings are separated as a first syllable.

Subsequently, the syllable separation rule is again applied from the third spelling. Hereinafter, the fed-back third spelling will be regarded as a first spelling.

Since the first spelling is a consonant (c), a second spelling is a vowel (i), a third spelling is a consonant (u) and a fourth spelling is a vowel (a), "ci" as the first and second spellings are separated into a second syllable.

Subsequently, the syllable separation rule is again applied from the third spelling. The consonant (n) as the third spelling is again considered as a first spelling, and a vowel (u) is again consecutive next to a vowel (a) as a second spelling. Therefore, the combined vowels (au) are combined as a second spelling. Since a third spelling is a consonant (c) and a fourth spelling is a vowel (i), "nau" as the first and second spellings are separated as a third syllable.

Subsequently, the syllable separation rule is again applied to the third spelling. The consonant (c) as the third spelling is again considered as a first spelling. Since a second spelling is a vowel (i), a third spelling is a consonant (n) and a fourth spelling is a vowel (i), "ci" as the first and second spellings are separated as a fourth syllable.

Subsequently, the consonant (n) as the third spelling is again considered as a first spelling. Since a second spelling is a vowel (i), a third spelling is a consonant (h) and a fourth spelling is a vowel (i), "ni" as the first and second spellings are separated as a fifth syllable.

The consonant (h) as the third spelling is again considered as a first spelling, a second spelling is a vowel (i), a third spelling is a consonant (I), and a fourth spelling is a vowel (i). Since the consonant (I) is consecutive next to the vowel (i), "il" is regarded as one vowel under the exceptional rule. Subsequently, since the vowel (i) is consecutive next to the one vowel, "ili" is regarded as one vowel, and is recognized as a second spelling. Since a third spelling is a consonant (p) and a fourth spelling is a vowel (i), "hili" as the first and second spellings are separated as a sixth syllable.

By repeating the processes described above, the "floccinaucinihilipilification" is separated into 10 syllables, i.e., floc/ci/nau/ci/ni/hili/pili/fi/ca/tion.

The interface control unit 110 may further include a text to speech (TTS) module that transmits the pronunciation of each of the syllables separated by the syllable separation module in synchronization with the separated syllables.

The TTS module outputs the pronunciation of a word stored in a text form in the database 130 in synchronization with the stored word.

If syllables are separated by the syllable separation module, a tag that is divisional data is added between the separated syllables so as to distinguish a pronunciation of one syllable from that of a next syllable. The TTS module transmits the pronunciation of each of the syllables by dividing the word into the syllables based on the tag.

More specifically, if the word "patent" [pætnt] is separated into "pa/tent" by the syllable separation module, a tag is inserted between the separated "pa" and "tent," and the TTS module may control the word "patent" to be separated into "pa [pæ]" and "tent [tnt]".

The English spelling learning system according to this embodiment may further include a learning control unit 120 that controls the interface control unit 100 to provide a learner with all words in a word group through the interface control unit 110, to extract only unfamiliar words selected by the learner so as to provide the extracted words to a next round, and to repeat the round until the learner has no unfamiliar word in the word group.

The learning control unit 120 will be described in detail in the following English spelling learning method.

FIG. 6 is a flowchart schematically illustrating an English spelling learning method according to a first embodiment of the present invention.

Referring to FIG. 6, a learner activates the English spelling learning system and then selects one of a learning mode or a test mode (S110).

Here, the learning mode refers to a mode in which the English spelling learning system guides the learner to perform spelling learning by sequentially displaying spellings of a word in a word group. The test mode refers to a mode in which the English spelling learning system sequentially displays spellings of a word in a word group so that at least one of the spellings remains as a blank, and tests whether or not the learner memorizes the spellings by directly inputting a spelling in the blank.

When the learner selects the learning mode, the interface control unit 110 selects a word group to be learned from word groups stored in the database 130 (S120).

Here, the word group refers to a group obtained by grouping a plurality of words for the purpose of English spelling learning. The word group may be obtained by grouping a plurality of words having the same degree of difficulty or by grouping a plurality of words having various degrees of difficulty. The degree of difficulty may be divided into a middle school level, a high school level, a TOEIC level, a TOFEL level and a GRE level according to vocabularies.

When the learner mainly learns words, only the words may be grouped. When the learner mainly learns sentences words, only the sentences may be grouped.

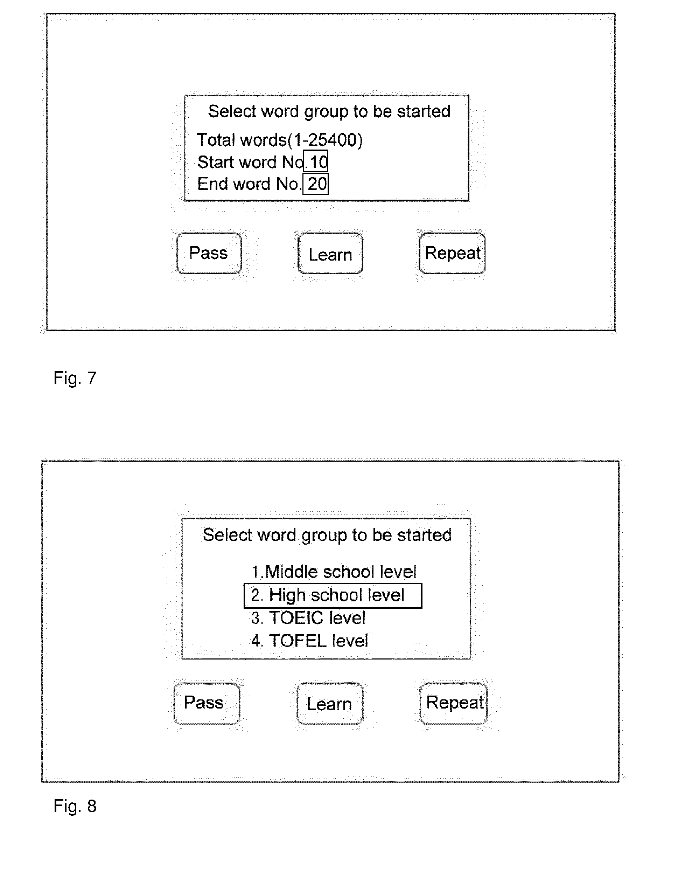

When extracting one of the word groups, the learner may select a specific range from the word groups stored as shown in FIGS. 7 to 9. FIG. 7 shows an example in which the learner selects 10th to 20th words as a group. In this case, it is necessary to perform numbering on all the word groups stored in the database 30.

FIG. 8 shows an example in which the learner selects a specific group from a list of word groups previously grouped for each degree of difficulty. In this case, it is necessary to classify word groups in advance and store the classified word groups in the database.

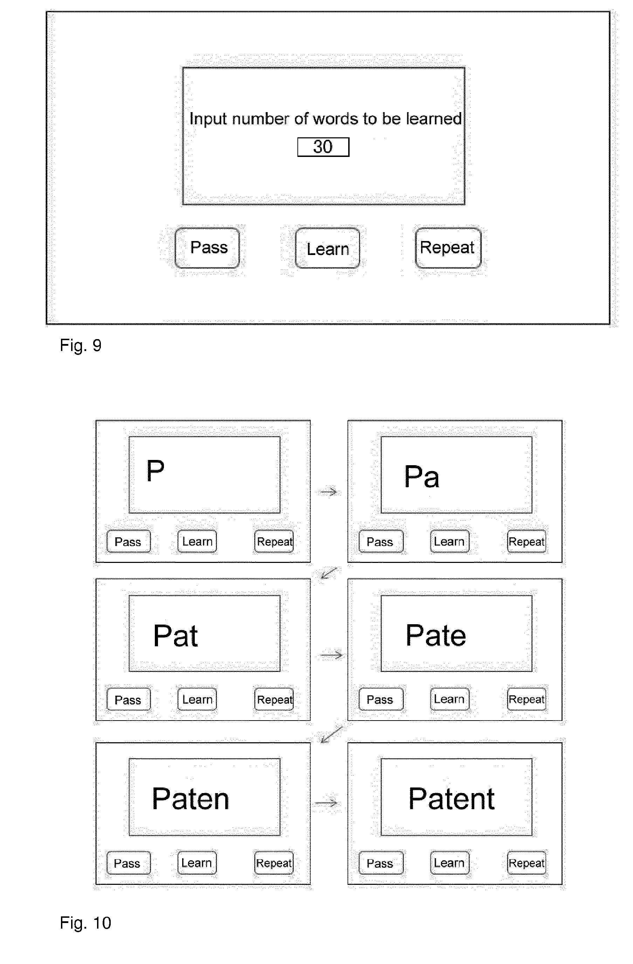

As shown in FIG. 9, the learner may select a word group by inputting only a number of words to be learned and extracting words corresponding to the inputted number from the database through a random extraction algorithm.

Subsequently, the extracted words in the word group are sequentially displayed under the control of the interface control unit 110, and a first round learning is performed by sequentially outputting spellings of each of the words at a predetermined time interval.

Here, the interface control unit 110 may control a typing sound to be simultaneously outputted together with the corresponding spelling so as to induce learner's concentration, or may control the spellings having different colors to be outputted as shown in FIG. 10 or control an alphabet sound of the corresponding spelling to be outputted.

When syllables of a word or phrase are separated and outputted, the syllable separation module of the interface control unit 110 separates the syllables of the word or phrase and sequentially outputs spellings of each of the separated syllables under the control of the interface control unit 110. In this case, the interface control unit 110 may control the syllable separation module to sequentially output the spellings of the word or phrase by inserting a space between the syllables or displaying the syllables having different colors.

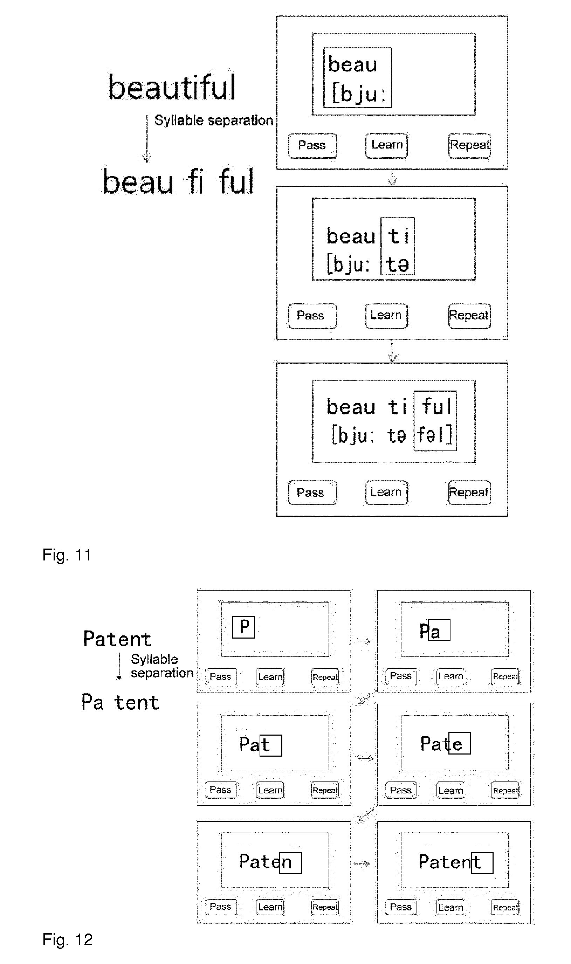

That is, as shown in FIG. 11, the interface control unit 110 may control the TTS module to output the pronunciation of a syllable together with the corresponding syllable while inserting a space between the syllables.

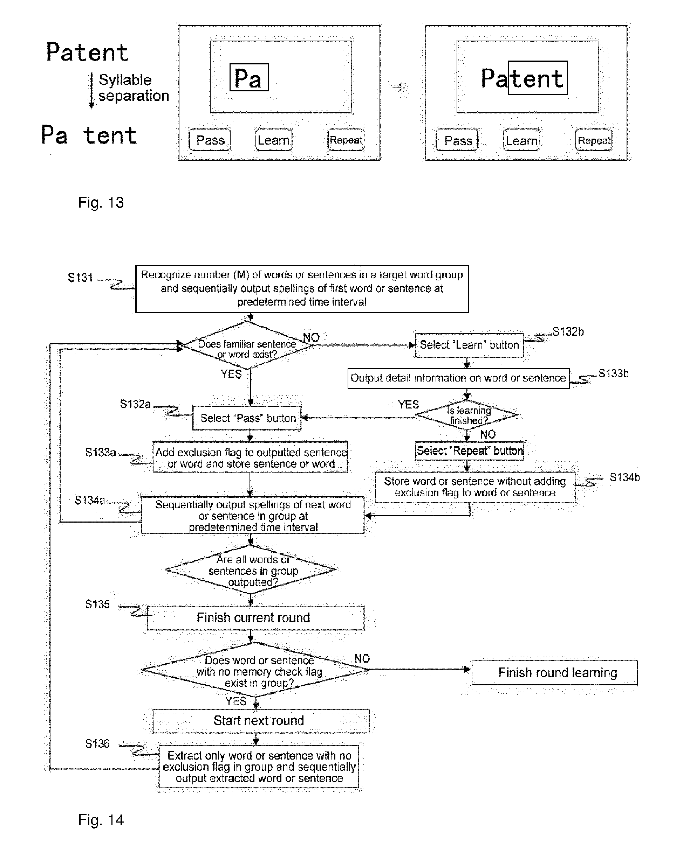

The interface control unit 110 may control spelling of each of the separated syllables to be sequentially displayed as shown in FIG. 12, or may control the whole separated syllables to be sequentially displayed as shown in FIG. 13.

When a word is displayed as described above, the interface control unit 110 may control a pronunciation symbol to be displayed under the word.

As the result of the first round learning, the English spelling learning system performs a next round learning by extracting only unfamiliar words in the word group selected by the learner, and repeats the round learning until there exists no unfamiliar words in the word group (S130).

The step S130 may be implemented as the following embodiments.

FIG. 14 is a detailed flowchart illustrating of step S130 (round learning step) of FIG. 6 according to the first embodiment of the present invention.

The step S130 (round learning step) according to the first embodiment will be described in detail with reference to FIG. 14.

First, spellings or syllables of a first word in a word group (assuming that the number of words in the word group is M) are sequentially displayed at a predetermined time interval (S131).

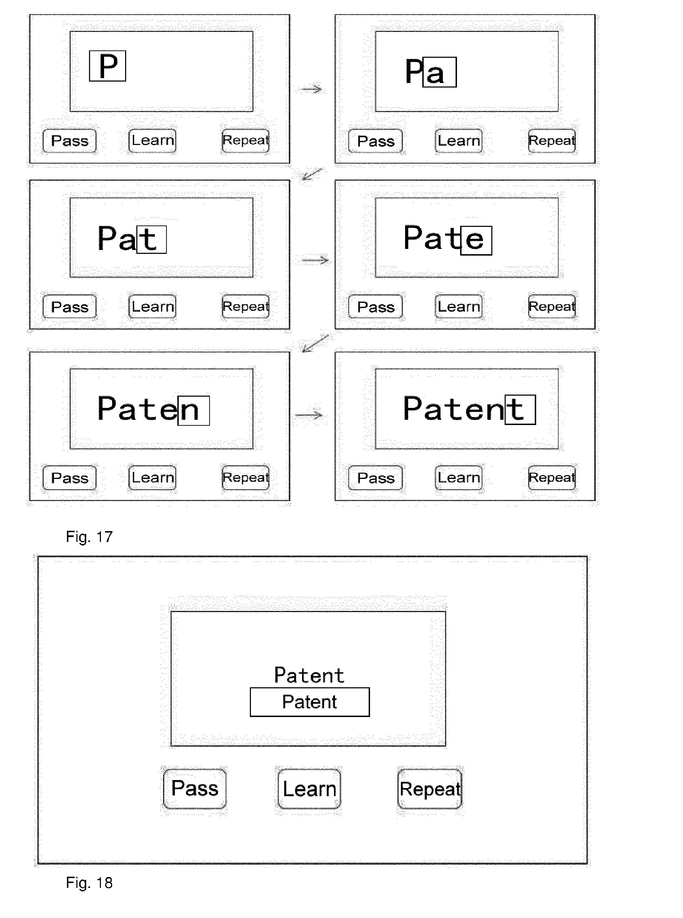

For example, when the word is "patent, "p," "a," "t," "e," "n" and "t" are sequentially displayed at a predetermined time interval as shown in FIG. 17. If the syllable separation rule is applied, the separated syllables "pa" and "tent" may be simultaneously displayed while being separated on a space, or may be separated using a space or color so that spellings of each of the syllables are sequentially displayed.

When the word is familiar with the learner after all the spellings of each of the words, the learner selects a menu "Pass" provided from the interface control unit 110 (S132a). When the word is unfamiliar with the learner, the learner selects a menu "Learn" (S132b).

If the menu "Pass" is selected, an exclusion flag is added to a currently displayed word, and the word having the exclusion flag added thereto is stored in the database 130 (S133a). Then, a next word is displayed (S134a). If the menu "Learn" is selected, detailed information of the corresponding word as shown in FIG. 18.

Here, the menu "Pass" is a button inputted when the learning of the word is completed, and the menu "Learn" is a button inputted when the learning of the word is necessary.

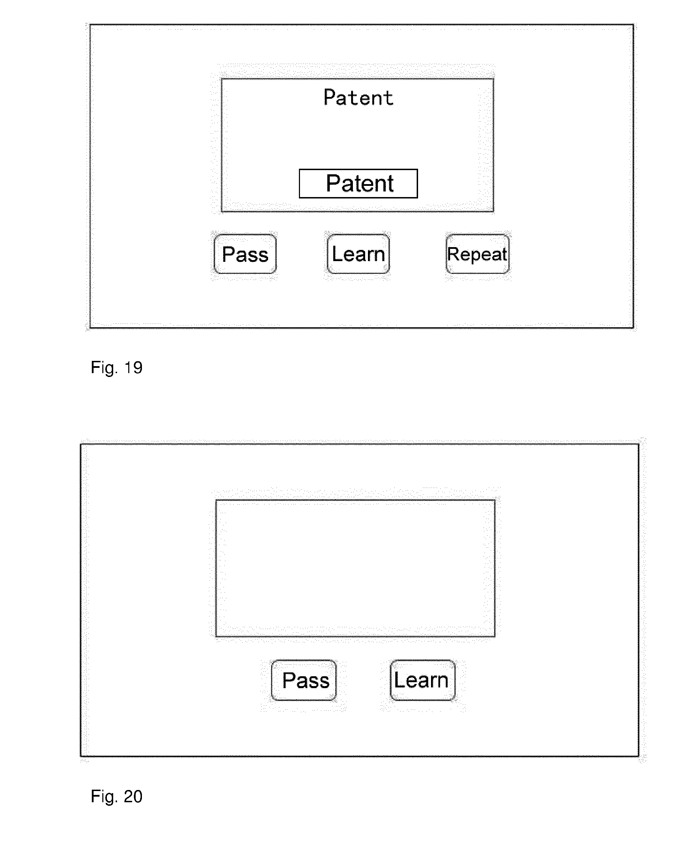

In order to improve the learning effect, a corresponding word may be displayed using a color different from that of the previous word and the word and detailed information of the word may be displayed while being spaced apart from each other as shown in FIG. 19.

If a predetermined time (e.g., 5 seconds) elapses after one word is displayed without a separate menu "Pass," it is decided that the word is a familiar word. Therefore, an exclusion flag is added to the word, and the word having the exclusion flag added thereto is stored in the database 130.

The detailed information may contain information on meanings, exemplary sentences, derivatives and origins of a word. The detailed information may contain information on meanings of a sentence, meanings of words included in the sentence, grammars applied to the sentence and other exemplary sentences of the grammars. The detailed information may be configured so that a second foreign language (e.g., Chinese, Japanese, etc.) different from English is displayed for the purpose of English learning for nations in other countries except Koreans.

When the learning of the word is completed by displaying the detailed information, the learner selects the menu "Pass." When the learning of the word is not completed, the learner selects a menu "Repeat."

If the menu "Pass" is selected, steps posterior to the step S133a are performed. If the menu "Repeat" is selected, a next word is displayed without adding the exclusion flag for the learned word (S134b).

The current round is finished by repeating the steps S131 to S134 with respect to the next word until the words in the word group are all displayed (S135).

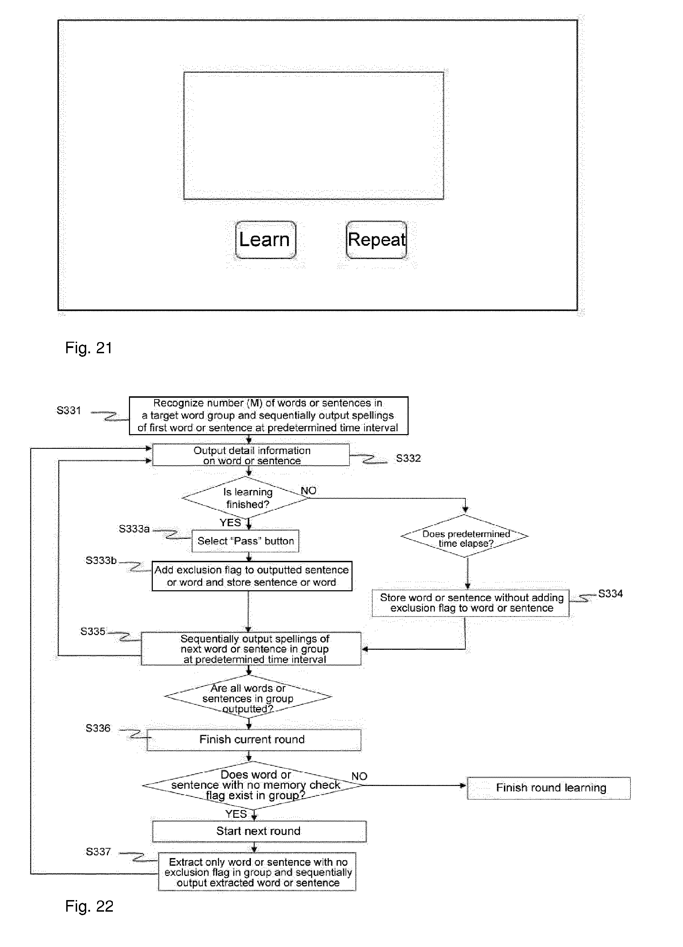

According to the second embodiment, only the menu "Pass" may be provided as shown in FIG. 20. According to a third embodiment, only the menu "Repeat" may be provided as shown in FIG. 21.

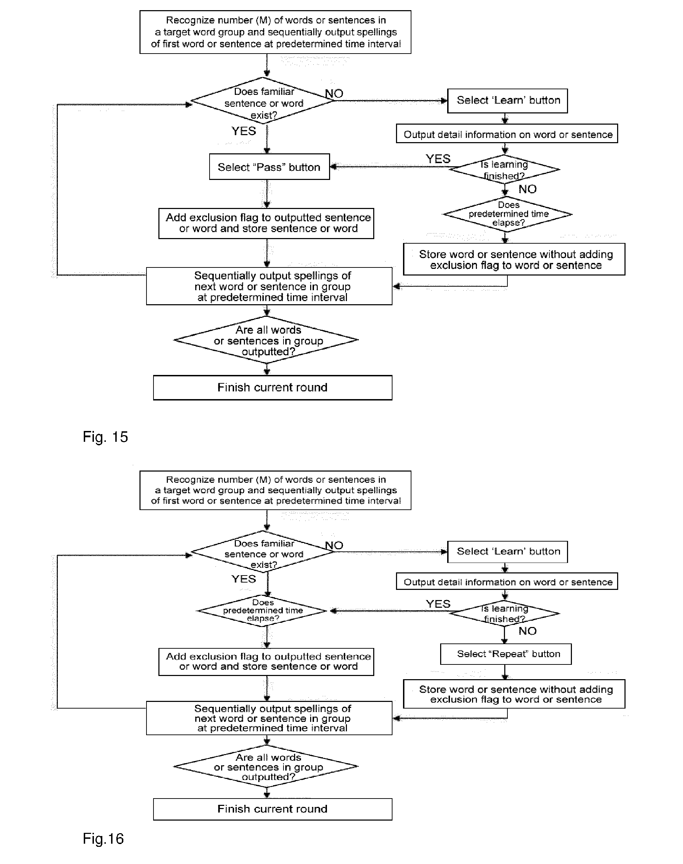

FIG. 15 is a detailed flowchart illustrating of the step S130 of FIG. 6 according to a second embodiment of the present invention. FIG. 16 is a detailed flowchart illustrating of the step S130 of FIG. 6 according to a third embodiment of the present invention.

Referring to FIG. 15, the second embodiment is a case in which the menu "Repeat" is excluded, and is identical to the first embodiment except that if a predetermined time elapses by counting the predetermined time after the menu "Learn" is selected so as to display detailed information in the step S133b of the first embodiment, a word is stored without adding an exclusion flag to the corresponding word by recognizing the corresponding word as a word of which learning is not completed.

Referring to FIG. 16, in the third embodiment of the present invention, if a predetermined time elapses when the corresponding word is a word memorized by the learner or word of which learning is completed, the word is recognized as the word of which learning is completed. Therefore, the word is stored by adding an exclusion flag thereto, and a next word is displayed.

When the learning of the next word is necessary, the learner selects the menu "Learn." If the menu "Learn" is selected, detailed information on the corresponding word is displayed. If the predetermined time elapses when the learning of the word is completed after the learning of the word is performed based on the detailed information, the word is stored by adding an exclusion flag thereto, and a next word is displayed. When the menu "Repeat" is inputted, the word is stored without adding the exclusion flag to the word, and a next word is displayed.

That is, the first embodiment uses an interface for excluding the display of a word of which learning is completed by the learner in a next round using the menu "Pass." On the other hand, the second embodiment uses an interface for selecting the display of a word necessary for learning in a next round using the menu "repeat."

If the current round is finished, a next round is performed by extracting only words (words having no exclusion flag) for which the menu "Learn" is selected from the words displayed in the current round, sequentially displaying the extracted words, and repeating the steps S131 to S135. The next round is performed until there exists no word having no exclusion flag from the whole words in a word group by repeating processes of extracting only words (words having no exclusion flag) for which the menu "Learn" is selected from the words displayed in the next round and sequentially displaying the extracted words. Then, the learning mode is finished (S136).

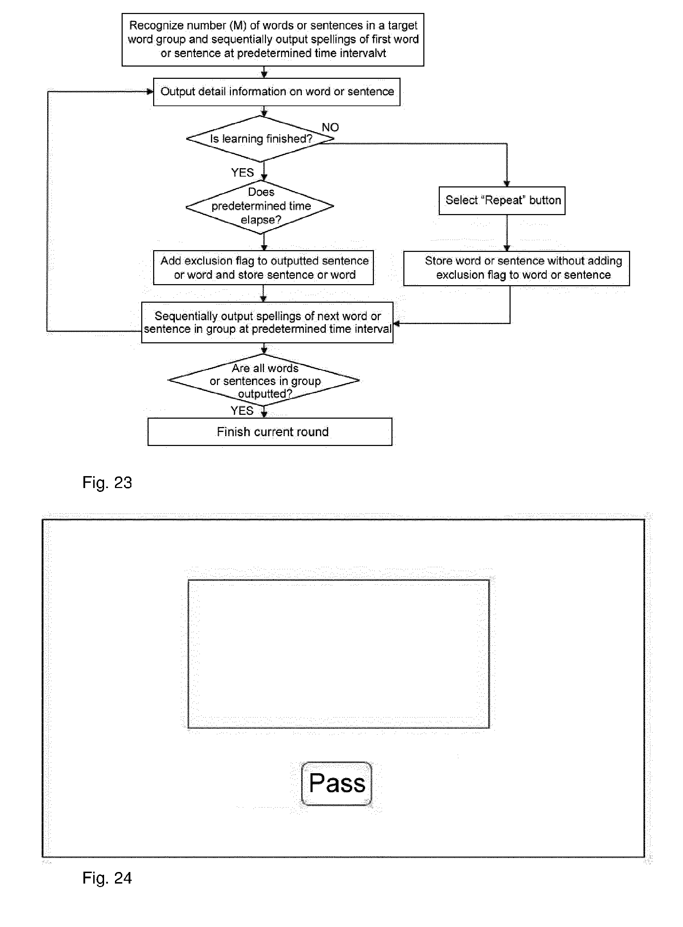

FIG. 22 is a detailed flowchart illustrating the step S130 of FIG. 6 according to a fourth embodiment of the present invention. FIG. 24 shows an interface according to the fourth embodiment of the present invention.

The step S130 (round learning step) according to the fourth embodiment will be described in detail with reference to FIGS. 22 and 24.

First, spellings or syllables of a first word in a word group (assuming that the number of words in the word group is M) are sequentially displayed at a predetermined time interval (S331).

For example, when the word is "patent, "p," "a," "t," "e," "n" and "t" are sequentially displayed at a predetermined time interval as shown in FIG. 17. If the syllable separation rule is applied, the separated syllables "pa" and "tent" may be simultaneously displayed while being separated on a space, or may be separated using a space or color so that spellings of each of the syllables are sequentially displayed.

After all spellings of each of the words are displayed and a predetermined time (e.g., 2 seconds) elapses, detailed information of the word is automatically displayed (S332). The detailed information may be displayed at the same time when the word is displayed.

When the word is a word memorized by the learner or sentence familiar with the learner during the spellings and detailed information of the word are displayed or after the display is completed, the learner selects the menu "Pass" (S333a).

If the menu "Pass" is selected, an exclusion flag is added to the displayed sentence or word, and the sentence or word having the exclusion flag added thereto is stored in the database 130 (S333b).

If the predetermined time (e.g., 2 seconds) elapses without selecting the menu "Pass" when the displayed word is a word not memorized by the learner or when the displayed sentence is a sentence unfamiliar with the learner, the word or sentence is stored in the database 130 without adding the exclusion flag thereto.

Subsequently, the current round is finished by repeating the steps S331 to S334 until all the words in the word group are displayed (S335).

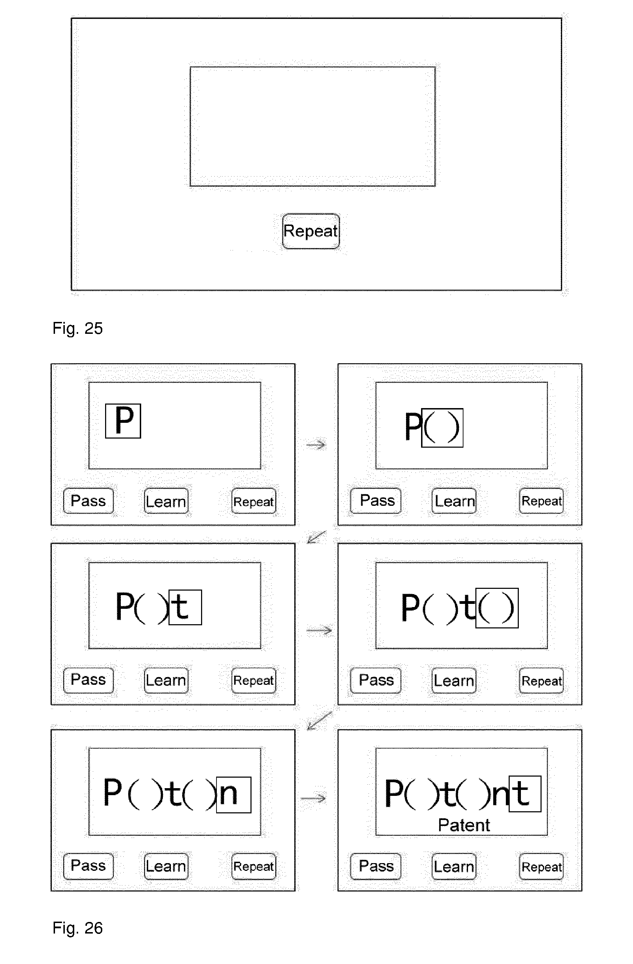

According to a fifth embodiment, the menu "Repeat" may be provided rather that the menu "Pass" as shown in FIG. 25.

FIG. 23 is a detailed flowchart illustrating the step S130 of FIG. 6 according to a fifth embodiment of the present invention.

Referring to FIG. 23, the fifth embodiment of the present invention does not have the menu "Pass." However, if a predetermined time elapses when a corresponding word is a word memorized by the learner or word of which learning is completed, the word is recognized as the word of which learning is completed. Therefore, an exclusion flag is added to the word, and the word having the exclusion flag added thereto is stored in the database 130. Then, a next word is displayed. When the menu "Repeat" is inputted, the word is stored in the database 130 without adding the exclusion flag thereto, and a next word is displayed.

That is, the first embodiment uses an interface for excluding the display of a word of which learning is completed by the learner in a next round using the menu "Pass." On the other hand, the second embodiment uses an interface for selecting the display of a word necessary for learning in a next round using the menu "repeat."

If the current round is finished, a next round is performed by extracting only words having no exclusion flag from the words displayed in the current round, sequentially displaying the extracted words, and repeating the steps S331 to S335. The next round is performed until there exists no word having no exclusion flag from the whole words in a word group by repeating processes of extracting only words having no exclusion flag from the words displayed in the next round and sequentially displaying the extracted words. Then, the learning mode is finished (S336).

When the learner selects the test mode after the learning mode is finished, a word group to be provided in the test mode is selected (S21 0).

Here, the word group of which learning is finished through the learning mode may be selected as the word group to be provided in the test mode, or the word group to be provided in the test mode may be randomly selected by another word group selected by the learner or the interface control unit.

Subsequently, words included in the selected word group are sequentially outputted identically to the learning mode, and a first test round is performed by remaining at least one spelling as a blank as shown in FIG. 26.

Here, spellings of each of the words and the blank are sequentially displayed at a predetermined time interval, and the English word and a Korean meaning of the English word may be displayed together.

The learner selects a menu "Finish" by directing inputting a spelling corresponding to the blank. When the inputted spelling is correct, an exclusion flag is added to the word, and the word having the exclusion flag added thereto is stored in the database. Then, a next word is displayed. When the inputted spelling is incorrect, a correct answer is displayed, and the word is then stored in the data base without adding the exclusion flag.

The first test round is finished by repeating the steps S220 and S230 with respect to a next word to be displayed until all words in the word group are displayed.

If the first test round is finished, a second test round is finished by extracting only words (words having no exclusion flag) in which the incorrect answer is inputted from the words displayed in the first round, sequentially displaying the words having at least one blank and the repeating the steps S130 to S150.

Here, the blank of the word displayed in the second round may be configured identically to that in the first test round. However, the blank may be displayed at the position of a spelling different from that in the first round so as to improve the learning effect.

To this end, an algorithm may be applied, in which a blank is generated by randomly extracting at least one spelling from a word of which learning is completed.

Subsequently, the test round is repeated until there exists no word having no exclusion flag from the whole words in the word group by repeating processes of extracting only words (words having no exclusion flag) in which the incorrect answer is inputted from the words displayed in the second round and sequentially displaying the extracted words. Then, the learning mode is finished (S230).

As described above, in the English spelling learning system and method according to the present invention, spellings of a word are sequentially displayed at a predetermined time interval, so that learner's concentration on the spellings can be improved when the spellings are sequentially displayed. Accordingly, spellings of an English word can be completely memorized together with the English word.

The embodiments of the present invention as described above are not implemented through only an apparatus and method, but can be implemented through a software, program, or data structure for realizing functions corresponding to the above embodiments on a recording medium in which the program is recorded. Such implementation will be evident to those having ordinary skill in the art from the description of the above embodiments.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. An English learning system sequentially displaying words through a display unit, the system comprising:
a database configured to store words to be learned; and
an interface control unit configured to extract a group from the words and sequentially display words contained in the group in the display unit, wherein the interface control unit controls spellings of each of the words to be sequentially displayed at a predetermined time interval.

2. An English learning system sequentially displaying words through a display unit, the system comprising:
a database configured to store words to be learned; and
an interface control unit configured to extract a group from the words and sequentially display words contained in the group in the display unit, wherein the interface control unit controls syllables separated from each of the words to be displayed together with an accent of the word.

3. An English learning system sequentially outputting word groups through a display unit, the system comprising:
a database configured to store words to be learned; and
an interface control unit configured to extract a group from the words and sequentially display words contained in the group in the display unit, wherein the interface control unit controls syllables separated from each of the words to be displayed.

4. The system of any one of claims 1 to 3, wherein the interface control unit further comprises a syllable separation module configured to separate a word contained in an extracted word or sentence for each syllable that is a minimum unit of pronunciation.

5. The system of claim 4, wherein the syllable separation module separates syllables in a word by applying four syllable separation rules comprising "single vowel," "consonant + vowel," "consonant + vowel + consonant" and "vowel + consonant."

6. The system of claim 5, wherein, when the syllable separation rules are applied:
the syllable separation module recognizes consecutive consonants as a single consonant, i) when same consonants are consecutive (excluding "cc + vowel," "II + vowel" and "rr + vowel"), ii) when different consonants are consecutively combined (consonant + h, dg, mm, ck and xy) and iii) when two consonants are exceptionally combined (s + consonant, consonant + r and consonant + I); and
the syllable separation module recognizes consecutive vowels as a single vowel, i) when same vowels are consecutive, ii) when two or more different vowels are consecutive, iii) when a vowel and a consonance are exceptionally combined (vowel + I, vowel + r and vowel + x) and iv) when a consonant is regarded as a vowel (consonant + y, excluding xy).

7. The system of claim 5, wherein the syllable separation module separates syllables from a word by sequentially analyzing spellings and applying one of the four syllable separation rules, wherein:
the syllable separation module separates a syllable by applying the rule "consonant + vowel + consonant" when a consonant, a vowel and a consonant are consecutive and a next spelling is a consonant, separates a syllable by applying the rule "consonant + vowel" when a next spelling is a vowel, and separates a syllable by sequentially analyzing spellings next to the separated syllable and applying one of the four syllable separation rules; and
the syllable separation module disregards a spelling consecutive after satisfying one of the four syllable separation rules when the spelling is the last spelling of the word.

8. The system of claim 5, wherein:
when a word comprises a minimum syllable not separated any more through the syllable separation module, the interface control unit regards a vowel contained in the word as an accent and displays the vowel to be distinguished from the other spellings; and
when a word is separated into at least two syllables through the syllable separation module, the interface control unit displays an accent (') of the word and a vowel corresponding to the accent so that the accent and the vowel are distinguished from each other.

9. The system of claim 2 or 3, wherein the interface control unit controls the syllables separated by the syllable separation module to be simultaneously displayed by inserting a space between the syllables or providing colors to the respective syllables.

10. The system of claim 2 or 3, wherein the interface control unit controls spellings of the syllables or spellings of each of the syllables separated by the syllable separation module to be sequentially displayed so that the separated syllables are separated by a predetermined space or colors of the separated syllables are different from one another.

11. The system of claim 10, wherein the interface control unit further comprises a text to speech (TTS) module configured to insert a tag as a syllable division data between the syllables separated by the syllable separation module, and output a pronunciation in synchronization with a syllable displayed for each of the syllables based on the tag.

12. The system of claim 1, wherein when spellings of the word are displayed, the interface control unit controls different colors of the spellings to be displayed or controls a typing sound or sound of a corresponding alphabet to be simultaneously outputted together with each of the spellings.

13. The system of claim 10 or 12, wherein the interface control unit controls syllables or spellings of the word to be displayed at a time interval set in a range from 0.01 to 2 seconds.

14. The system of any one of claims 1 to 11, further comprising a learning control unit configured to provide a learner with all words in a group through the interface control unit, extract only words unfamiliar with the learner and provide the extracted words to a next round, and provide a learning mode for controlling the interface control unit to repeat the round until there exists no word unfamiliar with the learner.

15. The system of claim 14, wherein:
the learning control unit provides a menu "Pass" selected when the word is a word familiar with the learner or the learning is completed, a menu "Learn" for providing detailed information of the word and a menu "Repeat" selected when the learning is not completed, and adds an exclusion flag to the word and stores the word having the exclusion flag added thereto in the database;
when the menu "Learn" is selected, the learning control unit provides the detailed information on the word;
when the menu "Pass" is selected after the learning of the word is completed, the learning control unit adds an exclusion flag to the word and stores the word having the exclusion flag added thereto in the database; and
when the menu "Repeat" is selected, the learning control unit stores the word without adding the exclusion flag to the word, and provides the learner with only words having no exclusion flag in a subsequent round.

16. The system of claim 14, wherein:
the learning control unit provides a menu "Pass" selected when the word is a word familiar with the learner or the learning is completed, a menu "Learn" for providing detailed information of the word and a menu "Repeat" selected when the learning is not completed, and adds an exclusion flag to the word and stores the word having the exclusion flag added thereto in the database;
when the menu "Learn" is selected, the learning control unit provides the detailed information on the word;
when the menu "Pass" is selected after the learning of the word is completed, the learning control unit adds an exclusion flag to the word and stores the word having the exclusion flag added thereto in the database; and
when a predetermined time is counted and the menu "Pass" is not inputted until the predetermined time elapses, the learning control unit stores the word without adding the exclusion flag to the word, and provides the learner with only words having no exclusion flag in a subsequent round.

17. The system of claim 14, wherein:
the learning control unit provides a menu "Learn" for providing detailed information of the word and a menu "Repeat" selected when the learning is not completed;
when a predetermined time is counted and the menu "Pass" is not inputted until the predetermined time elapses, the learning control unit adds an exclusion flag to the word and stores the word having the exclusion flag added thereto in the database;
when the menu "Learn" is selected, the learning control unit provides the detailed information on the word;
when the predetermined time is counted after the learning of the word is completed and the menu "Repeat" is not inputted until the predetermined time elapses, the learning control adds an exclusion flag to the word and stores the word having the exclusion flag added thereto in the database; and
when the menu "Repeat" is inputted, the learning control unit stores the word without adding the exclusion flag to the word, and provides the learner with only words having no exclusion flag in a subsequent round.

18. The system of claim 14, wherein:
the learning control unit displays a word and detailed information on the word at the same time or at a predetermined time interval, and provides a menu "Pass" selected when the word is a word familiar with the learner, and a menu "Repeat" selected when the learning is not completed;
when the menu "Pass" is inputted, the learning control unit adds an exclusion flag to the word and stores the word having the exclusion flag added thereto in the database; and
when the menu "Repeat" is selected, the learning control unit stores the word without adding the exclusion flag to the word, and provides the learner with only words having no exclusion flag in a subsequent round.

19. The system of claim 14, wherein:
the learning control unit sequentially displays a word and additional information on the word at the same time or at a predetermined time interval, and provides a menu "Pass" selected when the word is a word familiar with the learner;
when the menu "Pass" is inputted, the learning control unit adds an exclusion flag to the word and stores the word having the exclusion flag added thereto in the database; and
when a predetermined time is counted and the menu "Pass" is not inputted until the predetermined time elapses, the learning control unit stores the word without adding the exclusion flag to the word, and provides the learner with only words having no exclusion flag in a subsequent round.

20. The system of claim 14, wherein:
the learning control unit sequentially displays a word and additional information on the word at the same time or at a predetermined time interval, and provides a menu "Repeat" selected when the learning is not completed;
when a predetermined time is counted and the menu "Repeat" is not inputted until the predetermined time elapses, the learning control unit adds an exclusion flag to the word and stores the word having the exclusion flag added thereto in the database; and
when the menu "Repeat" is inputted, the learning control unit stores the word without adding the exclusion flag to the word, and provides the learner with only words having no exclusion flag in a subsequent round.

21. The system of any one of claims 15 to 20, wherein:
after the first round is finished, the learning control unit extracts only words having no exclusion flag from words contained in a group and repeatedly provides the extracted words to a second round; and
after the second round is finished, the learning control unit repeatedly performs the round until there exists no word having no exclusion flag in the group by repeating the process of extracting only words having no exclusion flag from the words contained in the group and repeatedly provides the extracted words to a third round.

22. The system of claim 21, wherein the learning control unit further comprises a test mode providing module configured to sequentially display words contained in a selected group, and test a learner's spelling ability by providing at least one spelling of the words as a blank and deciding whether or not the corresponding spelling directly inputted by the learner is correct.

23. The system of claim 22, wherein:
when the spelling inputted into the blank by the learner is correct, the test mode providing module adds an exclusion flag to the word and stores the word having the exclusion flag added thereto in the database; and
when the inputted into the blank by the learner is incorrect, the test mode providing module repeatedly provides the test in a next round without adding the exclusion flag to the word.
